# EUROPÄISCHE PATENTANMELDUNG

(11) **EP 4 442 176 A1**
(43) Veröffentlichungstag der Anmeldung: **09.10.2024**
(21) Anmeldenummer: 24168095.8
(22) Anmeldetag: 02.04.2024
(51) Int. Cl.: A47J 31/42, A47J 31/44, A47J 42/08, A47J 42/18, A47J 42/40

(54) **MAHLEINHEIT FÜR GETRÄNKEZUBEREITUNGSVORRICHTUNG MIT MAHLGRADVERSTELLUNG**

(30) Priorität: 06.04.2023 DE 102023108959
(71) Anmelder: Eugster/Frismag AG, 8580 Amriswil (CH)
(72) Erfinder: Wäger, Simon, 8580 Amriswil (CH); Burkart, Olaf, 9245 Oberbüren (CH)
(74) Vertreter: Patent- und Rechtsanwälte Behrmann Wagner PartG mbB

(57) **Zusammenfassung**

Die Erfindung betrifft eine Mahleinheit (1) für eine Getränkezubereitungsvorrichtung (20), aufweisend ein Mahlwerk (2) zum Mahlen von Getränkesubstrat zu Substratmehl (8) mit einem ersten und einem zweiten Mahlelement, wobei der den Mahlgrad definierende Abstand der Mahlelemente zueinander über eine Mahlgradverstelleinrichtung (7) verstellbar ist, und weiter aufweisend eine Getränkesubstratbevorratungseinrichtung zum Eintrag des Getränkesubstrats in das Mahlwerk (2) und weiter aufweisend eine Steuereinrichtung zum Steuern der Mahlgradverstelleinrichtung (7), des Mahlwerks (2) und/oder der Getränkesubstratbevorratungseinrichtung. Erfindungsgemäß ist vorgesehen, dass der Mahlgrad während der Bereitstellung der vorbestimmten Substratmehlportion verstellbar ist, wobei die Steuereinrichtung zur Aufteilung der vorbestimmten Substratmehlportion in mehrere Teilmengen (9, 11) unterschiedlichen Mahlgrads eingerichtet ist, und wobei die Steuereinrichtung die Mahlgradverstelleinrichtung (7), das Mahlwerk (2) und/oder die Getränkesubstratbevorratungseinrichtung derart steuernd eingerichtet ist, dass eine erste Teilmenge (9) an Substratmehl (8) eines ersten Mahlgrads und nachfolgend zumindest eine weitere Teilmenge (11) an Substratmehl (8) eines weiteren Mahlgrads aus der Mahleinheit ausgebbar ist, wobei die Teilmengen (9, 11) der vorbestimmten Substratmehlportion entsprechen.

## Beschreibung

Die vorliegende Erfindung betrifft eine Mahleinheit für eine Getränkezubereitungsvorrichtung nach dem Oberbegriff des Anspruchs 1 sowie ein Verfahren gemäß dem Oberbegriff des Anspruchs 10 zur Bereitstellung einer in Abhängigkeit eines zuzubereitenden Getränks vorbestimmten Substratmehlportion.

Zudem betrifft die Erfindung eine Getränkezubereitungsvorrichtung, insbesondere einen Kaffeevollautomaten, gemäß Anspruch 15 mit einer Mahleinheit.

Ferner betrifft die Erfindung ein Verfahren gemäß dem Oberbegriff des Anspruchs 18 zum Betrieb einer Getränkezubereitungsvorrichtung.

Aus dem Stand der Technik sind Mahleinheiten bekannt, die im Wesentlichen aus einem Mahlwerk zum Mahlen von Getränkesubstrat zu Substratmehl, insbesondere einem Mahlwerk zum Mahlen von Kaffeebohnen zu Kaffeebohnenmehl, und einer Austragseinrichtung zur Ausgabe und/oder Weitergabe eines gemahlenen Substratmehls bekannt. Weiter ist es bekannt, dem Mahlwerk vorgelagert eine Getränkesubstratbevorratungseinrichtung, insbesondere einen Bevorratungsbehälter für Kaffeebohnen, vorzusehen. Die bekannten Mahleinheiten kommen nicht ausschließlich aber bevorzugt als Teil, Baugruppe oder Komponente von Getränkezubereitungsvorrichtungen, insbesondere Kaffeevollautomaten, Kaffee- und/oder Espressomaschinen, zum Einsatz. Dort dient die Mahleinheit dazu, ein möglichst optimales Getränk bereit zu stellen oder einen möglichst optimalen Brühvorgang des Getränkesubstrats oder Substratmehls zu ermöglichen, indem das Getränkesubstrat frisch gemahlen und im frisch gemahlenen Zustand einer Brüheinheit der Getränkezubereitungsvorrichtung zugeführt oder zur Verfügung gestellt wird. Der Mahlvorgang und das gemahlene Substratmehl haben dabei einen Einfluss auf den Geschmack des Getränks.

Um die Eigenschaften oder Charakteristika des aufgebrühten Getränks, insbesondere des Kaffees oder des Espressos, zu beeinflussen, ist bei Getränkezubereitungsvorrichtungen oder Mahleinheiten aus dem Stand der Technik bereits bekannt, den Mahlgrad des Getränkesubstrats, insbesondere der Kaffeebohnen, in regelmäßigen Abständen, beispielsweise bei einem Wechsel der Sorte des Getränkesubstrats, zu verändern.

Des Weiteren beeinflusst die Brüheinheit einer Getränkezubereitungsvorrichtung die Eigenschaften oder Charakteristika des aufgebrühten Getränks, insbesondere des Kaffees oder des Espressos. Bei gattungsgemäßen Getränkezubereitungsvorrichtungen, beispielsweise Kaffee- und/oder Espressomaschinen sowie Kaffee- und/oder Espressovollautomaten, kommen bereits Brüheinheiten in verschiedenen Ausgestaltungen zum Einsatz. Die Brüheinheit übernimmt dabei die Funktion ein Getränkesubstratmehl, beispielsweise Kaffeepulver an einem Auslass oder Ausgang eines Mahlwerks einer Mahleinheit, aufzunehmen, anschließend das Getränkesubstrat zu verdichten, mit einem Brühfluid zu versetzen oder auszulaugen und im Anschluss an einen Brühvorgang oder zum Abschluss eines Brühvorgangs das aufgebrühte oder ausgelaugte Getränkesubstratmehl auszuwerfen.

Zu diesen Zwecken verfügen die bekannten Brüheinheiten über Brühkammern, die entsprechend zwischen verschiedenen Positionen oder Stellungen innerhalb der Brüheinheit zur Aufnahme des Substratmehls bewegt, verstellt oder aus der Brüheinheit entnommen werden können.

Zudem kann vor oder zu Beginn des Brühvorgangs das Getränkesubstrat in der Brühkammer verdichtet werden. Nach dem Verdichten des Getränkesubstrats in der Brühkammer, dem sogenannten Tampern, kann über entsprechende Öffnungen, Zuleitungen und Pumpmittel des Brühfluid in die Brühkammer eingeleitet und dadurch der Brühvorgang initiiert werden. Der Austrag des Getränks erfolgt bei bekannten Brüheinheiten durch ein oder mehrere Siebelemente, so dass möglichst wenige Feststoffe des Getränkesubstratmehls im ausgetragenen Getränk enthalten sind.

Jedoch besteht das Problem, dass es je nach Partikelgröße des Substratmehls auf Dauer zu Verstopfungen im Bereich der Brüheinheit, insbesondere im Bereich des dort üblicherweise vorgesehenen Siebelements, kommen kann. Insbesondere eine zu kleine Partikelgröße oder ein zu hoher Feinanteil innerhalb des Substratmehls können zu einer Verstopfung des Siebelements führen. Wird andererseits die Partikelgröße zu groß gewählt, steigt unerwünschter Weise die zur Zubereitung eines Getränks erforderliche Menge an Getränkesubstrat, beispielsweise an Kaffeebohnen.

Aufgabe der vorliegenden Erfindung ist es deshalb, eine Mahleinheit für eine Getränkezubereitungsvorrichtung, insbesondere für einen Kaffeevollautomaten, vorzuschlagen, die die Nachteile im Stand der Technik überwindet. Insbesondere ist es die Aufgabe der vorliegenden Erfindung, eine Mahleinheit mit Mahlgradverstellung zu realisieren, die bei geringem Verbrauch an Getränkesubstrat eine Verstopfungen der Brüheinheit vermeidende Substratmehlportion zur Verfügung stellt.

Ferner besteht die Aufgabe darin eine Getränkezubereitungsvorrichtung mit einer derartig verbesserten Mahleinheit anzugeben. Auch besteht die Aufgabe darin, ein verbessertes Verfahren zur Bereitstellung einer Substratmehlportion sowie ein Verfahren zum Betrieb einer verbesserten Getränkezubereitungsvorrichtung anzugeben.

Diese Aufgabe wird hinsichtlich der Mahleinheit mit den Merkmalen des Anspruchs 1 gelöst. Bezüglich der Getränkezubereitungsvorrichtung wird diese Aufgabe mit den Merkmalen des Anspruchs 14 gelöst. Hinsichtlich des Verfahrens zur Bereitstellung einer Substratmehlportion wird die Aufgabe mit den Merkmalen des Anspruchs 9 gelöst. Bezüglich des Verfahrens zum Betrieb der Getränkezubereitungsvorrichtung wird die Aufgabe mit den Merkmalen des Anspruchs 17 gelöst.

Vorteilhafte Ausführungsformen sind Gegenstand der Unteransprüche, der Beschreibung, der Figurenbeschreibung und der Figuren.

Insgesamt sollen alle vorrichtungsmäßig offenbarten Merkmale auch als verfahrensmäßig offenbart gelten, und umgekehrt.

Die erfindungsgemäße Mahleinheit für eine Getränkezubereitungsvorrichtung, insbesondere einen Kaffeevollautomaten, umfasst eine Getränkesubstratbevorratungseinrichtung, insbesondere einen Bohnenbehälter, und ein Mahlwerk, bevorzugt ein Bohnenmahlwerk, zum Mahlen von Getränkesubstrat, bevorzugt Kaffeebohnen, zu Substratmehl, insbesondere Kaffeebohnenmehl. Dabei umfasst das Mahlwerk ein erstes und ein zweites Mahlelement, wobei der Abstand der Mahlelemente zueinander über eine Mahlgradverstelleinrichtung verstellbar ist. Ferner ist vorgesehen, dass Getränkesubstrat, insbesondere Kaffeebohnen, in der Getränkesubstratbevorratungseinrichtung bevorratet und von der Getränkesubstratvorrichtung in das Mahlwerk, bevorzugt in einen Eingangsabschnitt des Mahlwerks, und weiter zwischen die Mahlelemente gelangen kann oder gefördert werden kann. Zudem weist die Mahleinheit eine Steuereinrichtung zum Steuern der Mahlgradverstelleinrichtung, des Mahlwerks und/oder der Getränkesubstratbevorratungseinrichtung auf. Bevorzugt steuert die Steuereinrichtung den Eintrag von Getränkesubstrat mittels der Getränkesubstratbevorratungseinrichtung und/oder die Mahldauer des Mahlwerks und/oder die Einstellung des Mahlgrads mittels der Mahlgradverstelleinrichtung. Die Steuerung des Mahlwerks und/oder der Getränkesubstratbevorratungseinrichtung und/oder der Mahlgradverstelleinrichtung durch die Steuereinrichtung erfolgt bevorzugt als Reaktion auf ein, bevorzugt manuelles, Betätigen eines an der Mahlvorrichtung oder an einer eine erfindungsgemäße Mahlvorrichtung umfassenden Getränkezubereitungsvorrichtung vorgesehenen Aktivierungselements durch eine Bedienperson, wodurch die Zubereitung eines Getränks oder die Bereitstellung einer Substratmehlportion ausgelöst werden kann. Die Zubereitung des Getränks erfolgt unter Nutzung voreingestellter gespeicherter Parameterdaten. Ebenfalls erfolgt die Bereitstellung der Substratmehlportion unter Nutzung voreingestellter gespeicherter Parameterdaten, die beispielsweise die Aufteilung der Substratmehlportion in Teilmengen und den Mahlgrad der Teilmengen betreffen, in Reaktion auf die Wahl des Getränks oder die Sorte des Getränkesubstrats durch die Bedienperson. Mit anderen Worten ist anhand der in der Steuereinrichtung gespeicherten Parameterdaten die Zusammensetzung der Substratmehlportion in Abhängigkeit des Getränks oder der Sorte des Getränkesubstrats vorbestimmt.

Erfindungsgemäß ist weiter vorgesehen, dass der Mahlgrad während der Bereitstellung der vorbestimmten Substratmehlportion verstellbar ist, wobei die Steuereinrichtung zur Aufteilung der vorbestimmten Substratmehlportion in mehrere Teilmengen, bevorzugt zwei Teilmengen, unterschiedlichen Mahlgrads eingerichtet ist, und wobei die Steuereinrichtung die Mahlgradverstelleinrichtung, das Mahlwerk und/oder die Getränkesubstratbevorratungseinrichtung derart steuernd eingerichtet ist, dass eine erste Teilmenge an Substratmehl eines ersten Mahlgrads und nachfolgend zumindest eine weitere Teilmenge an Substratmehl eines weiteren Mahlgrads aus der Mahleinheit ausgebbar ist, wobei die Gesamtheit der Teilmengen der vorbestimmten Substratmehlportion entspricht.

Die vorliegende Erfindung basiert also auf der Grundidee, dass der Mahlgrad während der Bereitstellung einer Substratmehlportion verstellt werden kann, so dass eine Substratmehlportion bereitgestellt werden kann, die aus mehreren Teilmengen, bevorzugt zwei Teilmengen, Substratmehl unterschiedlichen Mahlgrads zusammengesetzt ist. Dies erlaubt vorteilhafterweise die Beeinflussung des Getränks, insbesondere der Qualität des Getränks, durch Anwendung unterschiedlicher Mahlgradeinstellungen während der Bereitstellung einer Substratmehlportion und/oder innerhalb eines Getränkebezugs. Dabei hat es sich als vorteilhaft erwiesen, wenn die Verstellung des Mahlgrads bevorzugt innerhalb einer Zeitspanne von 0,1 Sekunden bis 2 Sekunden erfolgen kann. Weiter bevorzugt dauert die Verstellung des Mahlgrads maximal 0,5 Sekunden.

Unter einem Getränkebezug ist im Rahmen der Erfindung die Ausgabe eines Getränks aus einer Getränkezubereitungsvorrichtung zu verstehen. Beispielsweise kann ein Getränkebezug die Ausgabe einer Tasse Cafe Crema oder einer Tasse Espresso sein. Für einen Getränkebezug ist das Aufbrühen einer in eine Brühkammer eingebrachten Substratmehlportion erforderlich. Mit anderen Worten ist je Getränk eine Substratmehlportion bereitzustellen. Die Substratmehlportion kann erfindungsgemäß mehrere Teilmengen an Substratmehl unterschiedlichen Mahlgrads, d.h. unterschiedlicher Partikelgröße, umfassen.

Die Steuereinrichtung der erfindungsgemäßen Mahleinheit ist dazu eingerichtet, in Abhängigkeit der Sorte des Getränkesubstrats, beispielsweise der Kaffeebohnensorte, und/oder in Abhängigkeit des zuzubereitenden Getränks und/oder in Abhängigkeit der vorbestimmten Substratmehlportion, insbesondere in Abhängigkeit des Volumens oder Gewichts der vorbestimmten Substratmehlportion, die vorbestimmte Substratmehlportion in mehrere Teilmengen, bevorzugt zwei Teilmengen, unterschiedlichen Mahlgrads aufzuteilen. Weiter ist die Steuereinrichtung zum Steuern der Mahlgradverstelleinrichtung derart eingerichtet, dass die Steuereinrichtung nach Abschluss des Mahlvorgangs der ersten Teilmenge an Substratmehl die Mahlgradverstelleinrichtung zur Verstellung des Mahlgrads ansteuern kann, so dass in einem weiteren Mahlvorgang eine weitere Teilmenge der Substratmehlportion mit zur ersten Teilmenge unterschiedlichem Mahlgrad gemahlen werden kann. Es ist im Rahmen der Erfindung erkannt worden, dass mit steigender Anzahl der Teilmengen, in die die Substratmehlportion aufgeteilt wird, die Mahldauer der einzelnen Teilmengen sinkt. Es kann auch vorgesehen sein, dass die Steuereinrichtung die Mahlgradverstelleinrichtung zur kontinuierlichen oder nahezu kontinuierlichen Mahlgradverstellung ansteuert, insbesondere, wenn die Substratmehlportion in eine relativ hohe Anzahl an Teilmengen unterschiedlichen Mahlgrads aufgeteilt ist. Weiter kann die Steuereinrichtung dazu eingerichtet sein, die Mahldauer des Mahlwerks zu steuern, indem die Steuereinrichtung das Mahlwerk, insbesondere einen motorischen Antrieb des Mahlwerks, ansteuern kann, um einen Mahlvorgang des Mahlwerks zu starten oder zu beenden. Die Mahldauer entspricht somit der Ansteuerungszeit des Mahlwerks. Die Steuerung der Mahldauer des Mahlwerks lässt vorteilhafterweise eine zuverlässige Ausgabe und Überwachung der Teilmengen an Substratmehl zu. Hierbei kann der Umstand genutzt werden, dass bei bekannter Mahldauer des Mahlwerks und bekanntem Mahlgrad auf die gemahlene Substratmenge rückgeschlossen werden kann.Zusätzlich oder alternativ kann die Anzahl der Umdrehungen der Mahlelemente des Mahlwerks, bevorzugt sensorisch, erfasst werden und anhand der Anzahl der Umdrehungen die aus dem Mahlwerk ausgegebene Substratmenge bestimmt werden.

Für den Fall, dass die Getränkesubstratbevorratungseinrichtung eine angetriebene Dosier- oder Fördereinheit aufweist, kann die Steuereinrichtung zur Steuerung der Getränkesubstratbevorratungseinrichtung derart eingerichtet sein, dass die Steuereinrichtung den Antrieb der Dosier- oder Fördereinheit der Getränkesubstratbevorratungseinrichtung zur Dosierung oder Förderung von Getränkesubstrat in das Mahlwerk ansteuert. Bevorzugt kann das Getränkesubstrat ausschließlich über Schwerkrafteinwirkung in das Mahlwerk gelangen oder gefördert werden.

Weiter kann mit der erfindungsgemäßen Mahlvorrichtung eine Substratmehlportion derart in eine Brühkammer einer Brüheinheit eingebracht werden, dass zur Vermeidung von Siebverstopfungen eine Teilmenge der Substratmehlportion mit größerer Partikelgröße an einem Siebelement, insbesondere einem Brühsieb, der Brüheinheit zur Anlage gebracht werden kann, während eine weitere Teilmenge geringerer Partikelgröße beabstandet von dem Siebelement in der Brühkammer der Brüheinheit aufgenommen werden kann. Anhand der relativ großen Partikel im Bereich des Siebelements können Verstopfungen des Siebelements vermieden und ein Durchtritt von Feinanteilen der Substratmehlportion durch das Siebelement verhindert werden, während die erforderliche Getränkesubstratmenge zur Bereitstellung einer Substratmehlportion durch Anwendung eines feineren Mahlgrades beim Mahlen der weiteren Teilmenge mit geringerer Partikelgröße reduziert werden kann. Dem Grundprinzip der Erfindung folgend können die von der Mahlvorrichtung nacheinander bereitgestellten Teilmengen an Substratmehl mit unterschiedlicher Partikelgröße schichtweise in eine Brühkammer eingebracht werden. Bevorzugt ist zuerst eine Schicht geringerer Partikelgröße einbringbar und nachfolgend eine Schicht größerer Partikelgröße in eine Brühkammer einbringbar.

Da die vollständige Mahlung einer Substratmehlportion nicht wie bisher in Mahlwerken für Getränksubstrat üblich mit einem einzigen Mahlgrad vollzogen wird, sondern erfindungsgemäß nacheinander zumindest zwei Teilmengen der Substratmehlportion mit zumindest zwei unterschiedlichen Mahlgraden gemahlen werden, kann die Ausbildung der Substratmehlportion, insbesondere der schichtweise Aufbau der Substratmehlportion in einer Brühkammer, an eine Brüheinheit einer Getränkezubereitungsvorrichtung, insbesondere an die Ausgestaltung eines Siebelements der Brüheinheit, und/oder an das zuzubereitende Getränk angepasst werden. So können Siebverstopfungen bei gleichzeitiger Erhöhung der Qualität des zuzubereitenden Getränks vermieden werden.

Gemäß einer vorteilhaften Ausführungsvariante der Mahleinheit, kann vorgesehen sein, dass die Mahleinheit ein Erfassungsmittel zur Erfassung eines Mengenparameters, insbesondere eines Substratmehlvolumens oder eines Substratmehlgewichts, der ausgegebenen Teilmengen an Substratmehl umfasst. Bevorzugt handelt es sich dabei um Mittel zum Erfassen eines Substratmehlvolumens, wobei jedoch alternativ, etwa über geeignete Wägemittel, auch das Erfassen eines Gewichts einer Substratmehlmenge möglich ist. Weiter bevorzugt sind die Erfassungsmittel ausgangsseitig an der Mahleinheit angeordnet. Die Erfassungsmittel erzeugen aus dem Erfassungsergebnis, also etwa aus einem erfassten Substratmehlvolumen, ein Erfassungssignal, welches über die erfindungsgemäße Steuereinrichtung so zum Mahlwerk und/oder der Getränkesubstratbevorratungseinrichtung geschleift (rückgekoppelt) werden kann, dass der mengenmäßige Austrag eines Mahlvorgangs einer Teilmenge an Substratmehl aus der Mahleinheit, verglichen mit einem Sollwert des benötigten Substratmehlvolumens, Grundlage zur Steuerung des aktuellen Mahlvorgangs sowie für einen weiteren nachfolgenden Mahlvorgang einer weiteren Teilmenge an Getränkesubstrat sein kann. Dabei bildet sich im Optimalfall ein Regelsystem heraus, wobei die aufeinanderfolgend gemahlenen Teilmengen zu einer vorbestimmten Gesamtmenge an Substratmehl einer Substratmehlportion führen. Mit anderen Worten können anhand der Erfassungssignale der Erfassungsmittel einzelne Mahlvorgänge, insbesondere die Mahldauer des Mahlwerks, derart gesteuert werden, dass die gewünschten Teilmengen mengenmäßig genau ausgebbar und die Gesamtheit der Teilmengen an Substratmehl die Gesamtmenge der Substratmehlportion ergeben.

Dabei kann als Reaktion auf das Erfassungssignal eine veränderbare Bohnen-Eintragungsmenge erzeugt werden, wobei diese Dosierung des Bohneneintrags aus der Getränkesubstratbevorratungsvorrichtung sowohl durch eine herkömmliche Ansteuerungszeit des Mahlwerks erfolgen kann, als auch, durch vorbestimmte Bohnenmengen in einer geeignet zu beeinflussenden Dosierkammer.

In einer bevorzugten Ausführungsform weist die Mahlgradverstelleinrichtung ein Stellglied, einen elektromotorischen Verstellantrieb und ein Getriebe zur motorischen Verstellung des Mahlgrads auf. Zur automatischen Verstellung des Mahlgrads weist der Verstellantrieb bevorzugt einen Elektromotor mit Schneckenwelle auf, wobei die Schneckenwelle mit einem als Zahnradverbindung ausgebildeten Getriebe in Wirkverbindung steht, um ein Stellglied des Mahlwerks, insbesondere einen Verstellring, das wiederum in Wirkverbindung mit dem Getriebe steht, zu rotieren. Das Stellglied steht dabei derart mit den Mahlelementen in Wirkverbindung, dass eine Rotation des Stellglieds eine Veränderung des Abstands zwischen den Mahlelementen und somit eine Verstellung des Mahlgrads bewirkt. Weiter bevorzugt kann die Verstellung des Abstands der Mahlelemente zueinander über eine Rotationsbewegung des Stellglieds um die Drehachse der Mahlelemente erreicht werden. Alternativ zu einem Elektromotor mit Schneckenwelle ist beispielsweise auch ein Schrittmotor mit Planetengetriebe zur automatischen Verstellung des Mahlgrads einsetzbar, wobei das Planetengetriebe abtriebsseitig mit einem Stellglied des Mahlwerks, insbesondere einem Verstellring, in Wirkverbindung steht, um das Stellglied rotatorisch zu bewegen.

Gemäß einer bevorzugten Ausgestaltung der Erfindung sind das erste und das zweite Mahlelement des Mahlwerks mittels eines, insbesondere elektromotorischen, Antriebs relativ zueinander um eine Drehachse verdrehbar gelagert. Der Abstand der Mahlelemente zueinander kann in einfacher Art und Weise mittels der Mahlgradverstelleinrichtung verstellt werden, wobei die Verstellung über eine Rotationsbewegung eines Stellglieds, insbesondere um die Drehachse, erreicht werden kann. Bevorzugt ist das erste Mahlelement ein Mahlring und das zweite Mahlelement ein Mahlkegel. Weiter bevorzugt ist das erste Mahlelement mittels der Mahlgradverstelleinrichtung entlang der Drehachse linear verschieblich, um eine Veränderung des Mahlspalts und somit des Mahlgrads hervorgerufen durch die Änderung des Abstands der Mahlelemente zueinander zu bewirken.

Um eine hinreichend genaue Erfassung des Mahlgrads zu gewährleisten, hat es sich als vorteilhaft erwiesen, dass die Mahleinheit eine Mahlgradsensoreinrichtung zur Erfassung des eingestellten Mahlgrads umfasst. Das Sensorsignal der Mahlgradsensoreinrichtung ist an die Steuereinrichtung zum Abgleich eines Soll-Werts mit einem Ist-Wert des Mahlgrads übermittelbar, wobei in Abhängigkeit des Ergebnisses des Abgleichs die Steuereinrichtung den Verstellantrieb der Mahlgradverstelleinrichtung ansteuern kann. Bevorzugt umfasst die Mahlgradsensoreinrichtung einen Hall-Sensor, wobei an einer Motorwelle des Motors des Verstellantriebs ein diametral polarisierter Magnet angeordnet ist, der mit dem Hall-Sensor zusammenwirken kann, um eine Motorumdrehung und damit einen Mahlgrad bzw. eine Verstellung des Mahlgrads zu bestimmen. Weiter bevorzugt ist der Hall-Sensor umfangsseitig gegenüber dem diametralen Magneten angeordnet. Ein diametral polarisierter Magnet ist im Rahmen der Erfindung ein Magnet, dessen Pole sich im Durchmesser teilen. Das Ausmaß der Verstellung des Mahlgrades, bevorzugt einer stufenweisen Verstellung des Mahlgrads, kann in einfacher Art und Weise anhand der Umdrehungen der Motorwelle und der daraus resultierenden detektierten Signale des Hallsensors erfasst werden. Weiter bevorzugt kann die kleinste mögliche Auflösung der Erfassung des Mahlgrads auf ein Signal des Hallsensors und somit eine halbe Motorwellendrehung festgelegt sein. In Abhängigkeit der Wirkverbindung zwischen Schneckenwelle des Verstellantriebs, des Getriebes und des Stellglieds kann eine halbe Motorwellendrehung besonders bevorzugt eine Drehung des Stellglieds um bei 0,2° bewirken.

Wie bereits angedeutet, ist es besonders bevorzugt, wenn die Getränkesubstratbevorratungseinrichtung mit einer Auslassöffnung so gegenüber, bevorzugt über, dem Mahlwerk angeordnet ist, dass das Getränkesubstrat, bevorzugt ausschließlich über Schwerkrafteinwirkung, von der Getränkesubstratbevorratungseinrichtung in einen Eingangsabschnitt des Mahlwerks, insbesondere zwischen die Mahlelemente, gelangen kann. Somit kann eine angetriebene Dosier- oder Fördereinheit zur Förderung oder Dosierung von Getränkesubstrat in das Mahlwerk durch die Schwerkrafteinwirkung unterstützt oder auf eine angetriebene Dosier- oder Fördereinheit vollständig verzichtet werden, wodurch die Komplexität des Aufbaus der Mahleinheit reduziert werden kann.

Im Rahmen der Offenbarung sind die Begriffe "oben" und "unten" bezogen auf eine Vertikale, die sich senkrecht zu einer horizontalen Aufstellfläche, einer das Mahlwerk umfassenden Vorrichtung, insbesondere einer die Mahleinheit umfassenden Mühle, oder einer Getränkezubereitungsvorrichtung erstreckt.

Um die Komplexität der Mahleinheit weiter zu reduzieren, kann die Mahleinheit eine Substratmehlübergabeeinrichtung mit einer Austragsöffnung aufweisen. Die Substratmehlübergabeeinrichtung kann so gegenüber, bevorzugt unter, dem Mahlwerk angeordnet sein, dass Substratmehl, bevorzugt ausschließlich über Schwerkrafteinwirkung, aus der Mahleinheit austragbar ist. Bevorzugt ist das Substratmehl über die Substratmehlübergabeeinrichtung direkt in eine Brüheinheit, bevorzugt eine Brühkammer der Büheinheit, austragbar.

Außerdem kann besonders bevorzugt vorgesehen sein, dass die Drehachse der Mahlelemente eine Neigung gegenüber der Vertikalrichtung aufweist. Dadurch kann sichergestellt werden, dass der Austrag des Substratmehls aus der Mahleinheit in einer Richtung senkrecht zur Drehachse durch Schwerkrafteinwirkung unterstützt oder ausschließlich durch Schwerkrafteinwirkung erfolgen kann. Die Neigung liegt gegenüber der Vertikalrichtung bevorzugt zwischen 5° und 35°. Die Funktion des Erfindungsgegenstandes ist aber nicht von der Neigung gegenüber der Vertikalen abhängig. Grundsätzlich kann auch eine Ausrichtung entlang der Vertikalrichtung vorgesehen sein.

Ferner wird die oben genannte Aufgabe gelöst durch ein Verfahren zur Bereitstellung einer in Abhängigkeit eines zuzubereitenden Getränks vorbestimmten Substratmehlportion. Erfindungsgemäß sieht das Verfahren vor, dass in einem ersten Schritt das Mahlen eines Getränkesubstrats zu einer ersten Teilmenge an Substratmehl eines ersten Mahlgrads erfolgt. Dieser erste Schritt umfasst somit einen Mahlvorgang zur Bereitstellung einer ersten Teilmenge der Substratmehlportion, währenddessen ein erster Mahlgrad über den Abstand der Mahlelemente zueinander eingestellt ist. Nach oder während des Austrags der ersten Teilmenge an Substratmehl aus der Mahleinheit, bevorzugt in eine Brühkammer einer Brüheinheit, erfolgt eine Verstellung des Mahlgrads und anschließend zumindest ein weiterer Mahlvorgang mit einem weiteren vom ersten Mahlgrad verschiedeneren Mahlgrad zur Bereitstellung einer weiteren Teilmenge an Substratmehl. Die weitere Teilmenge des Substratmehls wird anschießend, bevorzugt in eine Brühkammer einer Brüheinheit, ausgegeben. Bevorzugt erfolgt die Verstellung des Mahlgrads noch während der Ausgabe der zuvor gemahlenen Teilmenge an Getränkesubstrat. Die Verstellung des Mahlgrads kann bevorzugt innerhalb einer Zeitspanne von 0,1 Sekunden bis 2 Sekunden erfolgen. Weiter bevorzugt dauert die Verstellung des Mahlgrads maximal 0,5 Sekunden.

Es ist denkbar, dass die Substratmehlportion in beliebig viele Teilmengen aufgeteilt wird und beliebig viele Teilmengen mit unterschiedlichem Mahlgrad gemahlen und ausgegeben werden. Erfindungsgemäß ist es vorgesehen, dass die Gesamtheit der Teilmengen die Gesamtmenge der vorbestimmten Substratmehlportion ergeben. Es ist im Rahmen der Erfindung erkannt worden, dass mit steigender Anzahl der Teilmengen, in die die Substratmehlportion aufgeteilt wird, die Mahldauer der einzelnen Teilmengen sinkt. Vor diesem Hintergrund ist es denkbar, dass der Mahlgrad kontinuierlich oder nahezu kontinuierlich verstellbar ist.

Als besonders vorteilhaft hat es sich erwiesen, wenn die Substratmehlportion in zwei Teilmengen unterschiedlichen Mahlgrads aufgeteilt wird, so dass in einem ersten Schritt das Mahlen eines Getränkesubstrats zu einer ersten Teilmenge an Substratmehl eines ersten Mahlgrads erfolgt, anschließend die erste Teilmenge an Substratmehl ausgetragen wird, und wobei nach Verstellen des Mahlgrads das Mahlen des Getränkesubstrats zu einer zweiten Teilmenge an Substratmehl mit einem zweiten zum ersten unterschiedlichen Mahlgrad erfolgt. Zur Bereitstellung der vollständigen Substratmehlportion wird anschließend die zweite Teilmenge an Substratmehl ausgetragen. Bevorzugt können die Schritte des Mahlens und des Austragens der Teilmengen zeitlich parallel oder überlappend ablaufen, so dass während des Mahlens bereits ein Austrag von Substratmehl erfolgt.

Grundsätzlich soll zur Vermeidung unnötiger Wiederholungen im Hinblick auf die Merkmale, Eigenschaften und Vorteile des erfindungsgemäßen Verfahrens auf die obige Offenbarung der Mahleinheit Bezug genommen werden. Dies bedeutet, dass grundsätzlich verfahrensmäßig offenbarte und beschriebene Merkmale als vorrichtungsmäßig beschrieben und beanspruchbar gelten sollen, und umgekehrt.

Gemäß einer besonders bevorzugten Ausführung des Verfahrens kann es vorgesehen sein, dass die erste Teilmenge an Substratmehl zu einer geringeren Partikelgröße als die weitere Teilmenge an Substratmehl gemahlen wird. Im Rahmen der Erfindung besteht ein direkter Zusammenhang zwischen Partikelgröße des Substratmehls und Mahlgrad, wobei je höher der Mahlgrad, also je geringer der Abstand zwischen den Mahlelementen, ist desto geringer ist die Partikelgröße des ausgebbaren Substratmehls. Somit kann durch die besonders bevorzugte Ausführung des Verfahrens eine Brühkammer einer Brüheinheit derart schichtweise gefüllt werden, dass zuerst eine Schicht Substratmehl geringer Partikelgröße eingebracht wird, was vorteilhafterweise zur Reduzierung der Menge an Getränkesubstrat führt, und nachfolgend eine Schicht Substratmehl größerer Partikelgröße auf die erste Schicht aufgebracht wird, die ein Verstopfen des Siebelements der Brüheinheit verhindert.

Besonders vorteilhaft hat es sich erwiesen, wenn der Mahlgrad motorisch verstellt wird. Die motorische Verstellung erlaubt die Überwachung bzw. Erfassung des Mahlgrads, wie oben bereits beschrieben, mittels einer geeigneten Sensoreinrichtung und den Verzicht auf Handbetätigungsmittel zur Mahlgradverstellung.

Gemäß einer weiteren vorteilhaften Weiterbildung des Verfahrens kann vorgesehen sein, dass der Mahlgrad der Teilmengen und/oder das Verhältnis der Teilmengen bezogen auf die Substratmehlportion in Abhängigkeit einer Sorte des Getränkesubstrats und/oder in Abhängigkeit eines zuzubereitenden Getränks automatisch, insbesondere mittels einer Steuereinrichtung, vorgegeben wird. Mit anderen Worten kann gemäß dieser Weiterbildung des Verfahrens die Aufteilung der Gesamtmenge an Substratmehl in mehrere Teilmengen unterschiedlichen Mahlgrads, gleichbedeutend mit dem Verhältnis der Teilmengen bezogen auf die Substratmehlportion, automatisch, bevorzugt unter Nutzung voreingestellter gespeicherter Parameterdaten, vorgegeben werden, ohne dass eine Entscheidung oder Eingabe einer Bedienperson erforderlich ist, und die Bedienperson vielmehr nur das zuzubereitende Getränk oder die Sorte des Getränkesubstrats bestimmt. Ebenfalls kann der Mahlgrad der Teilmengen automatisch, bevorzugt unter Nutzung voreingestellter gespeicherter Parameterdaten, vorgegeben werden, ohne dass eine Entscheidung oder Eingabe einer Bedienperson erforderlich ist. Besonders bevorzugt erfolgt die Verstellung des Mahlgrads motorisch und automatisch unter Nutzung voreingestellter gespeicherter Parameterdaten in Abhängigkeit des zuzubereitenden Getränks und/oder der Sorte des Getränkesubstrats.

Wie bereits zuvor angedeutet, ist es bevorzugt, wenn das Substratmehl in eine Brühkammer einer Getränkezubereitungsvorrichtung, insbesondere in eine Brühkammer eines Kaffeevollautomaten, ausgetragen wird. Insbesondere bei direktem Austrag der Teilmengen in eine Brühkammer kann in einfacher Art und Weise ein schichtweiser Aufbau aus Teilmengen der Substratmehlportion mit unterschiedlichem Mahlgrad bzw. unterschiedlicher Partikelgröße erfolgen. Bevorzugt sind die Teilmengen derart von der Mahleinheit in die Brühkammer auszutragen, dass, wie bereits angedeutet, zuerst eine Teilmenge geringer Partikelgröße in die Brühkammer ausgetragen wird, und nachfolgend eine Teilmenge größerer Partikelgröße ausgetragen wird. Die abschließende ausgebrachte Teilmenge der Substratmehlportion, die an einem Siebelement der Brüheinheit während des Brühvorgangs zur Anlage kommt, kann dabei vorteilhafterweise eine Partikelgröße aufweisen, die ein Verstopfen des Siebelements der Brüheinheit verhindert.

Die oben genannte Aufgabe wird auch gelöst mit einer Getränkezubereitungsvorrichtung, insbesondere einem Kaffeevollautomaten, mit einer, bevorzugt integrierten, Mahleinheit zur Bereitstellung einer in Abhängigkeit eines zuzubereitenden Getränks vorbestimmten Substratmehlportion und einer Brüheinheit zum Aufbrühen der von der Mahleinheit bereitgestellten Substratmehlportion, wobei in erfindungsgemäßer Weise die Mahleinheit nach einer der vorausgehenden Ausführungsformen ausgebildet ist.

Gemäß einer bevorzugten Ausgestaltung der Getränkezubereitungsvorrichtung kann während des Brühvorgangs ein Siebelement der Brüheinheit an der Teilmenge der Substratmehlportion mit der größten Partikelgröße zur Anlage gebracht werden. Sofern die Teilmenge der Substratmehlportion mit der größten Partikelgröße an einem Siebelement der Brüheinheit anliegt, können Verstopfungen des Siebelements vermieden werden. Hierbei ist es im Rahmen der Erfindung erkannt worden, dass vorteilhafterweise die Partikelgröße der am Siebelement zur Anlage gebrachten Teilmenge der Substratmehlportion größer ist als die Maschenweite des Siebelements.

Um eine von der Schwerkraftwirkung unterstützte Austragung des Substratmehls aus der Mahleinheit in die Brühkammer zu erreichen, kann die Mahleinheit gegenüber einer Brühkammer der Brüheinheit derart angeordnet sein, dass die Drehachse des Mahlwerks eine Neigung gegenüber der Symmetrieachse der Brühkammer, bevorzugt einer Brühkammer in Befüllposition, der Brüheinheit aufweist. Im Rahmen der Erfindung ist die Befüllposition der Brühkammer die Position der Brühkammer, in der das Befüllen der Brühkammer mit Substratmehl erfolgt, wobei insbesondere bei Kaffeevollautomaten während des Getränkebezugs ein Verschwenken von der Befüllposition in eine Brühposition, in der das Aufbrühen der Substratmehlportion erfolgt, vorgesehen sein kann. Bevorzugt verläuft die Symmetrieachse der Brühkammer in Befüllposition senkrecht zu einer horizontalen Aufstellfläche der Getränkezubereitungsvorrichtung und damit parallel zur Vertikalen. Weiter bevorzugt weist die Brühkammer eine Öffnung und einen, bevorzugt der Öffnung gegenüberliegenden, Brühkammerboden und einen an den Brühkammerboden angrenzenden, bevorzugt zylindrischen, insbesondere die Öffnung begrenzenden, Brühkammermantel auf. Ist der Brühkammermantel zylindrisch ausgebildet, fällt die Rotationsachse des Brühkammermantels mit der Symmetrieachse der Brühkammer zusammen.

Ferner wird die oben genannte Aufgabe gelöst durch ein Verfahren zum Betrieb einer Getränkezubereitungsvorrichtung zur Zubereitung eines Getränks, wobei die Getränkezubereitungsvorrichtung nach einer der vorausgehenden Ausführungsformen ausgebildet ist. Erfindungsgemäß sieht das Verfahren vor, dass in einem ersten Schritt die Auswahl des zuzubereitenden Getränks, bevorzugt durch die Bedienperson, erfolgt. Daran anschließend werden in Abhängigkeit des zuzubereitenden Getränks mehrere Teilmengen der Substratmehlportion mit unterschiedlichem Mahlgrad gemahlen und aus der Mahleinheit in die Brüheinheit, insbesondere die Brühkammer, der Getränkezubereitungsvorrichtung ausgetragen, wobei zwischen dem Mahlen zweier Teilmengen eine Verstellung des Mahlgrads erfolgt. Sofern die Gesamtmenge der Substratmehlportion in die Brüheinheit ausgetragen ist, kann die Substratmehlportion aufgebrüht oder verdichtet und anschließend aufgebrüht werden.

In einer vorteilhaften Weiterbildung des Verfahrens wird zumindest das Mahlen des Getränkesubstrats mit einem ersten Mahlgrad zu einer ersten Teilmenge einer vorbestimmten Substratmehlportion, das Austragen der ersten Teilmenge an Substratmehl in eine Brüheinheit der Getränkezubereitungsvorrichtung, das Verstellen des Mahlgrads, das Mahlen des Getränkesubstrats mit einem weiteren Mahlgrad zu einer weiteren Teilmenge einer vorbestimmten Substratmehlportion, das Austragen der weiteren Teilmenge an Substratmehl in die Brüheinheit der Getränkezubereitungsvorrichtung, das Verdichten der Substratmehlportion und/oder das Aufbrühen der Substratmehlportion automatisch, insbesondere unter Nutzung voreingestellter gespeicherter Parameterdaten, in Abhängigkeit des zuzubereitenden Getränks gesteuert. Bevorzugt wird das Mahlen des Getränkesubstrats mit einem ersten Mahlgrad zu einer ersten Teilmenge einer vorbestimmten Substratmehlportion, das Austragen der ersten Teilmenge an Substratmehl in eine Brüheinheit der Getränkezubereitungsvorrichtung, das Verstellen des Mahlgrads, das Mahlen des Getränkesubstrats mit einem weiteren Mahlgrad zu einer weiteren Teilmenge einer vorbestimmten Substratmehlportion, das Austragen der weiteren Teilmenge an Substratmehl in die Brüheinheit der Getränkezubereitungsvorrichtung, das Verdichten der Substratmehlportion und das Aufbrühen der Substratmehlportion automatisch, insbesondere unter Nutzung voreingestellter gespeicherter Parameterdaten gesteuert, so dass von einer Bedienperson nur die Auswahl des zuzubereitenden Getränks vorzunehmen ist. Weiter bevorzugt erfolgt die automatische Steuerung mittels einer Steuereinheit der Getränkezubereitungsvorrichtung, wobei die Steuereinheit der Getränkezubereitungsvorrichtung die Steuereinrichtung der Mahleinheit umfassen oder die Steuereinrichtung der Mahleinheit ansteuern kann.

Vorteilhafte Ausführungsbeispiele und Aspekte der vorliegenden Erfindung werden nachfolgend anhand der schematischen, lediglich beispielhaften Zeichnungen erläutert.

Darin zeigen:
- Fig. 1:: einen Schnitt durch eine erfindungsgemäße Getränkezubereitungsvorrichtung mit einer erfindungsgemäßen Mahleinheit während des Austrags einer ersten Teilmenge einer Substratmehlportion; und
- Fig. 2:: einen Schnitt durch eine erfindungsgemäße Getränkezubereitungsvorrichtung gemäß Fig. 1 während des Austrags einer zweiten Teilmenge einer Substratmehlportion.

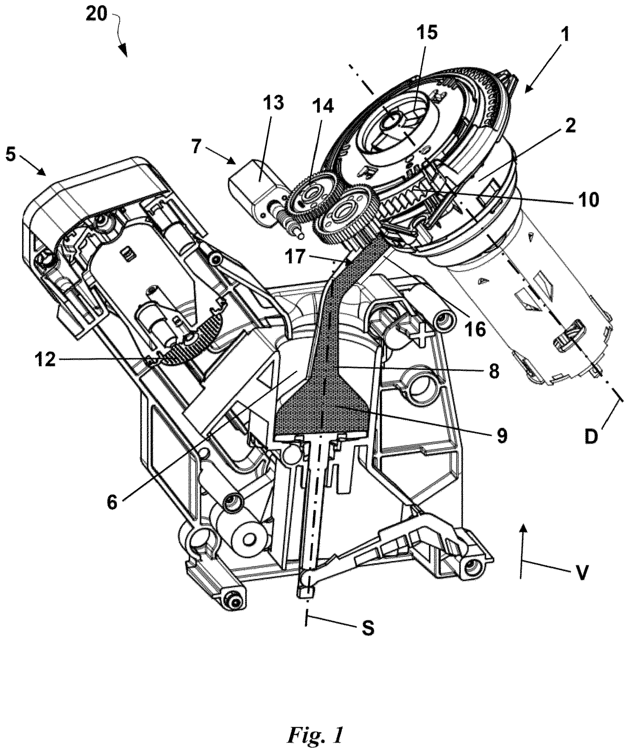

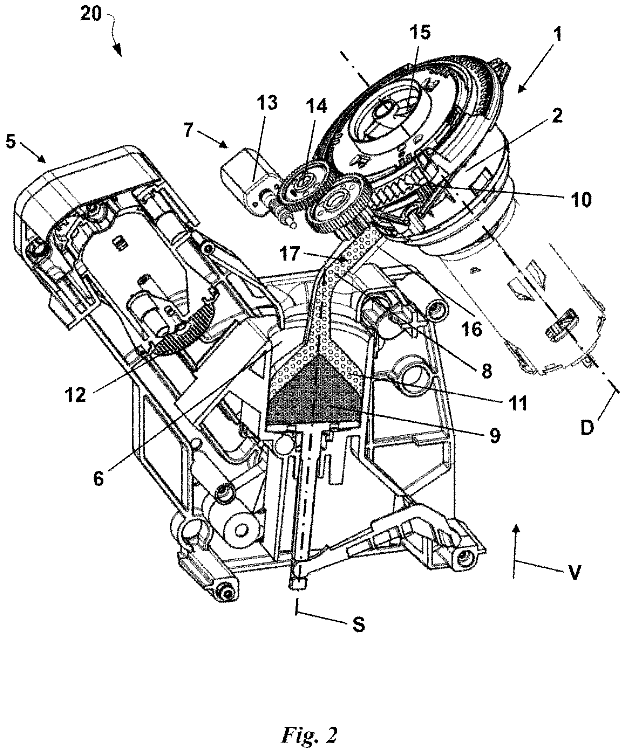

Die Figuren 1 und 2 zeigen eine erfindungsgemäße Getränkezubereitungsvorrichtung 20 umfassend eine erfindungsgemäße Mahleinheit 1 und eine Brüheinheit 5. Figur 1 zeigt die Getränkezubereitungsvorrichtung 20 während des Austrags einer ersten Teilmenge 9 der Substratmehlportion in die Brühkammer 6 der Brüheinheit 5, wohingegen Figur 2 die Getränkezubereitungsvorrichtung 20 während des Austrags einer zweiten Teilmenge 11 der Substratmehlportion in die Brühkammer 6 der Brüheinheit 5 zeigt.

Das Mahlwerk 2 ist nicht im Detail dargestellt. Zu erkennen ist jedoch ein Stellglied 10, welches als Teil einer Mahlgradverstelleinrichtung 7 fungiert, und mit dem Mahlwerk 2 in Wirkverbindung steht. Die rotative Bewegung des Stellglieds 10 wird über eine Aufnahme eines Mahlelements, insbesondere einer Mahlscheibe oder eines Mahlrings, in einem Gewinde in eine lineare Bewegung umgewandelt, um den Abstand der Mahlelemente zueinander zu verändern. Die lineare Bewegung erfolgt dabei entlang der Drehachse D, um die auch die Mahlelemente des Mahlwerks 2 rotieren. Das Stellglied 10 umfasst eine Außenverzahnung, die wiederum mit einer Außenverzahnung eines Zahnrads des Getriebes 14 im Eingriff steht. Das Getriebe 14 der Mahlgradverstelleinrichtung 7 steht mit wiederum mit dem Motor des Verstellantriebs 13 über eine Schneckenwelle in Wirkverbindung, so dass durch Rotation der Motorwelle des Verstellantriebs 13 eine Rotation des Stellglieds 10 bewirkbar ist. Der von einer nicht gezeigten Steuereinrichtung ansteuerbare Verstellantrieb 13 erlaubt oder ermöglicht somit eine Einstellung des Mahlgrads durch Bewirkung einer Rotation des Stellglieds 10 der Mahlgradverstelleinrichtung 7 um die Drehachse D. Insgesamt ist damit eine automatische, motorische Verstellung des Mahlgrads ermöglicht.

Ferner ist den Figuren 1 und 2 zu entnehmen, dass das in den Eingangsabschnitt 15 des Mahlwerks 2 einbringbare Getränkesubstrat, bevorzugt Kaffeebohnen, im Mahlwerk 2 zu einer in Abhängigkeit der Sorte des Getränkesubstrats und/oder des zuzubereitenden Getränks vorbestimmten Substratmehlportion gemahlen wird. Unter Nutzung voreingestellter gespeicherter Parameterdaten kann die Steuereinrichtung den motorischen Mahlantrieb des Mahlwerks 2 gemäß vorliegender Ausführungsform derart ansteuern, dass zwei die Substratmehlportion ausbildende Teilmengen 9, 11 an Substratmehl 8 nacheinander gemahlen und in die Brühkammer 6 der Brüheinheit 5 ausgetragen werden. Dabei wird die erste Teilmenge 9 mit einem anderen Mahlgrad als die zweite Teilmenge 11 derart gemahlen, dass die erste Teilmenge 9 eine geringere Partikelgröße als die zweite Teilmenge 11 aufweist. Dadurch entsteht, wie insbesondere Figur 2 zu entnehmen ist, ein schichtweiser Aufbau der Teilmengen 9, 11 in der Brühkammer 6, wobei die Teilmenge 11 in Vertikalrichtung V über der Teilmenge 9 in die Brühkammer 6 eingebracht ist. Anhand dieses schichtweisen Aufbaus kommt beim Schließen der Brühkammer 6 mittels des Brühkopfes das Siebelement 12 des Brühkopfes an der Teilmenge 11 der Substratmehlportion, die mit einem geringeren Mahlgrad gemahlen wurde und somit einen größeren Partikeldurchmesser aufweist, zur Anlage, wodurch Verstopfungen des Siebelements 12 vermieden werden können.

Einer Zusammenschau der Figuren 1 und 2 kann eine Ausführung des erfindungsgemäßen Verfahrens entnommen werden, wobei, wie in Figur 1 gezeigt, nach Auswahl des zuzubereitenden Getränks durch eine Bedienperson automatisch, unter Nutzung voreingestellter gespeicherter Parameterdaten gesteuert durch eine nicht gezeigte Steuereinrichtung zuerst eine Teilmenge 9 der Substratmehlportion mit einem ersten Mahlgrad gemahlen und über die Austragsöffnung 17 der Substratmehlübergabeeinrichtung 16 in die Brühkammer 6 ausgetragen wird. Anschließend oder gleichzeitig wird der Mahlgrad durch Ansteuerung der Mahlgradverstelleinrichtung 7 mittels der Steuereinrichtung automatisch verstellt. Nach Verstellung des Mahlgrads erfolgt automatisch, durch Ansteuerung des Mahlantriebs des Mahlwerks 2 mittels der Steuereinrichtung das Mahlen und Austragen der zweiten Teilmenge 11 mit einem von der ersten Teilmenge 9 unterschiedlichen Mahlgrad. Sobald die zweite Teilmenge 11 vollständig zur Ausbildung der Substratmehlportion in die Brühkammer 6 ausgetragen ist und somit die gesamte Substratmehlportion in die Brühkammer 6 eingebracht wurde, kann die Brühkammer 6 geschlossen werden, um die Substratmehlportion zu verdichten und aufzubrühen.

Um einen einfachen Austrag des Substratmehls 8 aus der Mahleinheit 1 in die Brühkammer 6 zu ermöglichen, ist die Mahleinheit gegenüber der Brüheinheit 5 und insbesondere gegenüber der Brühkammer 6 derart geneigt angeordnet, dass das Substratmehl 8 ausschließlich durch Schwerkrafteinwirkung durch die oberhalb der Brühkammer 6 angeordnete Austragsöffnung 17 der Substratmehlübergabeeinrichtung 16 in die Brühkammer 6 ausgetragen werden kann. Hierzu ist die Drehachse D des Mahlwerks 2 gegenüber der Vertikalrichtung V und der Symmetrieachse S der Brühkammer geneigt. Wie insbesondere der Figur 2 zu entnehmen ist, ist die Substratmehlübergabeeinrichtung 16 zur vollständigen Ausnutzung der Schwerkraftwirkung in Vertikalrichtung V unterhalb des Mahlwerks 2 und oberhalb der in Befüllposition befindlichen Brühkammer 5 angeordnet.

### Bezugszeichen

- 1: Mahleinheit
- 2: Mahlwerk
- 5: Brüheinheit
- 6: Brühkammer
- 7: Mahlgradverstelleinrichtung
- 8: Substratmehl
- 9: Erste Teilmenge
- 10: Stellglied
- 11: Zweite Teilmenge
- 12: Siebelement
- 13: Verstellantrieb
- 14: Getriebe
- 15: Eingangsabschnitt Mahlwerk
- 16: Substratmehlübergabeeinrichtung
- 17: Austragsöffnung
- 20: Getränkezubereitungsvorrichtung
- V: Vertikalrichtung
- D: Drehachse Mahlwerk
- S: Symmetrieachse Brühkammer

## Patentansprüche

1. Mahleinheit (1) für eine Getränkezubereitungsvorrichtung (20),
insbesondere einen Kaffeevollautomaten, zur Bereitstellung einer in Abhängigkeit eines zuzubereitenden Getränks vorbestimmten Substratmehlportion,
aufweisend ein Mahlwerk (2) zum Mahlen von Getränkesubstrat zu Substratmehl (8) mit einem ersten und einem zweiten Mahlelement, wobei der den Mahlgrad definierende Abstand der Mahlelemente zueinander über eine Mahlgradverstelleinrichtung (7) verstellbar ist, und weiter aufweisend eine Getränkesubstratbevorratungseinrichtung zum Eintrag des Getränkesubstrats in das Mahlwerk (2),
und weiter aufweisend eine Steuereinrichtung zum Steuern der Mahlgradverstelleinrichtung (7), des Mahlwerks (2) und/oder der Getränkesubstratbevorratungseinrichtung,
**dadurch gekennzeichnet, dass**
der Mahlgrad während der Bereitstellung der vorbestimmten Substratmehlportion verstellbar ist, wobei die Steuereinrichtung zur Aufteilung der vorbestimmten Substratmehlportion in mehrere Teilmengen (9, 11), bevorzugt zwei Teilmengen (9, 11), unterschiedlichen Mahlgrads eingerichtet ist,
und wobei die Steuereinrichtung die Mahlgradverstelleinrichtung (7), das Mahlwerk (2) und/oder die Getränkesubstratbevorratungseinrichtung derart steuernd eingerichtet ist, dass eine erste Teilmenge (9) an Substratmehl (8) eines ersten Mahlgrads und nachfolgend zumindest eine weitere Teilmenge (11) an Substratmehl (8) eines weiteren Mahlgrads aus der Mahleinheit ausgebbar ist, wobei die Teilmengen (9, 11) der vorbestimmten Substratmehlportion entsprechen.

2. Mahleinheit nach Anspruch 1,
**dadurch gekennzeichnet,**
**dass** ein Erfassungsmittel zur Erfassung eines Mengenparameters, insbesondere eines Substratmehlvolumens oder eines Substratmehlgewichts, der ausgegebenen Teilmengen (9, 11) an Substratmehl (8) umfasst ist.

3. Mahleinheit nach einem der Ansprüche 1 oder 2,
**dadurch gekennzeichnet,**
**dass** die Mahlgradverstelleinrichtung (7) ein Stellglied (10), einen elektromotorischen Verstellantrieb (13) und ein Getriebe (14) zur motorischen Verstellung des Mahlgrads aufweist.

4. Mahleinheit nach einem der Ansprüche 1 bis 3,
**dadurch gekennzeichnet,**
**dass** das erste und zweite Mahlelement mittels eines, insbesondere elektromotorischen, Mahlantriebs relativ zueinander um eine Drehachse verdrehbar gelagert sind.

5. Mahleinheit nach einem der Ansprüche 1 bis 4,
**dadurch gekennzeichnet,**
**dass** eine Mahlgradsensoreinrichtung zur Erkennung des eingestellten Mahlgrads umfasst ist.

6. Mahleinheit nach einem der Ansprüche 1 bis 5,
**dadurch gekennzeichnet,**
**dass** die Getränkesubstratbevorratungseinrichtung mit einer Auslassöffnung so gegenüber, bevorzugt über, dem Mahlwerk (2) angeordnet ist, dass das Getränkesubstrat, bevorzugt ausschließlich über Schwerkrafteinwirkung, von der Getränkesubstratbevorratungseinrichtung in einen Eingangsabschnitt (15) des Mahlwerks (7), insbesondere zwischen die Mahlelemente, gelangen kann.

7. Mahleinheit nach einem der Ansprüche 1 bis 6,
**dadurch gekennzeichnet,**
**dass** die Drehachse (D) der Mahlelemente eine Neigung gegenüber der Vertikalrichtung (V) aufweist und/oder eine Substratmehlübergabeeinrichtung (16) mit einer Austragsöffnung (17) so gegenüber, bevorzugt unter, dem Mahlwerk (2) angeordnet ist, dass das Substratmehl (8), bevorzugt ausschließlich über Schwerkrafteinwirkung, aus der Mahleinheit (1) austragbar ist.

8. Verfahren zur Bereitstellung einer in Abhängigkeit eines zuzubereitenden Getränks vorbestimmten Substratmehlportion, **gekennzeichnet durch** die folgenden Schritte:
- Mahlen eines Getränkesubstrats zu einer ersten Teilmenge an Substratmehl (8) eines ersten Mahlgrads,
- Austragen der ersten Teilmenge an Substratmehl (8),
- Verstellen des Mahlgrads,
- Mahlen des Getränkesubstrats zu einer weiteren Teilmenge an Substratmehl (8) eines weiteren Mahlgrads,
- Austragen der weiteren Teilmenge an Substratmehl (8).

9. Verfahren nach Anspruch 8,
**dadurch gekennzeichnet,**
**dass** die erste Teilmenge (9) an Substratmehl (8) zu einer geringeren Partikelgröße als die weitere Teilmenge (11) an Substratmehl (8) gemahlen wird.

10. Verfahren nach einem der Ansprüche 8 oder 9,
**dadurch gekennzeichnet,**
**dass** der Mahlgrad der Teilmengen (9, 11) und/oder das Verhältnis der Teilmengen (9, 11) bezogen auf die Substratmehlportion in Abhängigkeit einer Sorte des Getränkesubstrats und/oder in Abhängigkeit eines zuzubereitenden Getränks automatisch, insbesondere mittels einer Steuereinrichtung, vorgegeben wird.

11. Getränkezubereitungsvorrichtung (20), insbesondere Kaffeevollautomat, mit einer, bevorzugt integrierten, Mahleinheit (1) zur Bereitstellung einer in Abhängigkeit eines zuzubereitenden Getränks vorbestimmten Substratmehlportion und einer Brüheinheit (5) zum Aufbrühen der von der Mahleinheit (1) bereitgestellten Substratmehlportion,
**dadurch gekennzeichnet,**
**dass** die Mahleinheit (1) nach einem der Ansprüche 1 bis 7 ausgebildet ist.

12. Getränkezubereitungsvorrichtung nach Anspruch 11,
**dadurch gekennzeichnet,**
**dass** während eines Brühvorgangs ein Siebelement (12) der Brüheinheit (5) an der Teilmenge (11) der Substratmehlportion mit der größten Partikelgröße zur Anlage bringbar ist.

13. Getränkezubereitungsvorrichtung nach einem der Ansprüche 11 oder 12,
**dadurch gekennzeichnet,**
**dass** die Mahleinheit (1) gegenüber einer Brühkammer (6) der Brüheinheit derart angeordnet ist, dass die Drehachse (D) des Mahlwerks (2) eine Neigung gegenüber der Symmetrieachse (S) der Brühkammer (6) aufweist.

14. Verfahren zum Betrieb einer Getränkezubereitungsvorrichtung (20) ausgebildet nach den Ansprüchen 11 bis 13 zur Zubereitung eines Getränks, **gekennzeichnet durch** die folgenden Schritte:
- Auswahl des zuzubereitenden Getränks
- Mahlen eines Getränkesubstrats mit einem ersten Mahlgrad zu einer ersten Teilmenge (9) einer vorbestimmten Substratmehlportion,
- Austragen der ersten Teilmenge (9) an Substratmehl (8) in eine Brüheinheit (5) der Getränkezubereitungsvorrichtung (20),
- Verstellen des Mahlgrads,
- Mahlen des Getränkesubstrats mit einem weiteren Mahlgrad zu einer weiteren Teilmenge (11) einer vorbestimmten Substratmehlportion,
- Austragen der weiteren Teilmenge (11) an Substratmehl (8) in die Brüheinheit (5) der Getränkezubereitungsvorrichtung (20), und
- Verdichten der Substratmehlportion und/oder Aufbrühen der Substratmehlportion.

15. Verfahren zum Betrieb einer Getränkezubereitungsvorrichtung nach Anspruch 14,
**dadurch gekennzeichnet,**
**dass** zumindest einer der folgenden Schritte automatisch gesteuert wird:
- Mahlen eines Getränkesubstrats mit einem ersten Mahlgrad zu einer ersten Teilmenge (9) einer vorbestimmten Substratmehlportion,
- Austragen der ersten Teilmenge (9) an Substratmehl (8) in eine Brüheinheit (5) der Getränkezubereitungsvorrichtung (20),
- Verstellen des Mahlgrads,
- Mahlen des Getränkesubstrats mit einem weiteren Mahlgrad zu einer weiteren Teilmenge (11) einer vorbestimmten Substratmehlportion,
- Austragen der weiteren Teilmenge (11) an Substratmehl (8) in die Brüheinheit (5) der Getränkezubereitungsvorrichtung (20),
- Verdichten der Substratmehlportion und/oder Aufbrühen der Substratmehlportion.
